# EUROPEAN PATENT APPLICATION

(11) **EP 4 603 161 A1**
(43) Date of publication of application: **20.08.2025**
(21) Application number: 24386015.2
(22) Date of filing: 15.02.2024
(51) Int. Cl.: A63F 13/215, A63F 13/35, A63F 13/87, G10L 13/00, G10L 15/26, G10L 25/30

(54) **METHOD AND SYSTEM FOR FACILITATING AUDIO COMMUNICATION DURING ONLINE GAMEPLAY**

(71) Applicant: Sony Interactive Entertainment Inc., Tokyo 108-0075 (JP)
(72) Inventor: Michailidis, Lazaros, London, W1F 7LP (GB); Rodriguez Quiros, Estefania, London, W1F 7LP (GB); Henderson, Christopher William, London, W1F 7LP (GB); Barcias, Jesus Lucas, London, W1F 7LP (GB)
(74) Representative: Gill Jennings & Every LLP

(57) **Abstract**

The invention provides a method for facilitating audio communication between a first user device and a second user device connected via a network during an online video gaming session, the method comprising: receiving first audio data from an audio input device associated with the first user device, the first audio data representing one or more speech samples; generating text data representative of the first audio data; transmitting, by a network, the text data; generating second audio data based on the text data; and outputting audio based on the second audio data at an audio output device associated with the second user device.

## Description

### FIELD OF THE INVENTION

The present invention relates to improved techniques for facilitating audio communication. More particularly, the present invention relates to improved techniques for facilitating audio communication during an online video gaming session.

### BACKGROUND

Multiplayer video games utilising internet connectivity (i.e., online games) have increased in popularity as the availability of internet connectivity has increased. Many such video games provide means for audio communication, such as voice chat between users. Furthermore, applications exist which facilitate voice chat outside of the video game environment.

During an online gaming session, it is often crucial that audio communication occurs in as close to real-time as possible. In particular, many online video games require rapid communication to facilitate a satisfactory user experience. Any delays to audio communication can significantly reduce a user's experience.

Real-time voice chat requires a continuous transfer of audio data packets between a first user's device, a server, and a second user's device. In situations wherein a bandwidth of the network (e.g., the internet) is limited, the rate at which these audio data packets can be transmitted and received can be restricted. In these situations, the quality of audio may be reduced, audio delays (i.e., audio lag), and/or temporary disconnections may occur.

Therefore, voice chat during online gaming can be significantly impacted by bandwidth limitations.

The present invention has been devised to address at least some of the aforementioned problems.

### SUMMARY OF INVENTION

In accordance with a first aspect of the present invention, there is provided a method for facilitating audio communication between a first user device and a second user device connected via a network during an online video gaming session, the method comprising: receiving first audio data from an audio input device associated with the first user device, the first audio data representing one or more speech samples; generating text data representative of the first audio data; transmitting the text data; generating second audio data based on the text data; and outputting audio based on the second audio data at an audio output device associated with the second user device.

In the context of the present invention, the "first user device" and the "second user device" are devices arranged to facilitates respective users to perceive audio, visual, and/or haptic outputs of a video game of the video gaming session

In the context of the present invention, the term `online video gaming session' may refer to a period of time during which one or more users engage in playing a video game via respective user devices via a network, such as the internet. Each user device may play the same video game, such that the first user device plays the same video game as the second user device. Alternatively, each user device may play a different video game, such that the first user device plays a different video game to the second user device. It will be appreciated that in both alternatives, audio communication may be facilitated between the first user device and the second user device.

In the context of the present invention, the term 'speech sample' may refer to a segment of a verbal communication by a user recorded or detected by the audio input device. Thus, the one or more speech samples may be one or more portions or segments of a verbal communication by a user, the verbal communication being recorded by the audio input device associated with the first user device. Segmenting the verbal communication in this manner may be beneficial when assigning labels or features to the first audio data, as discussed further below.

The network is preferably any suitable network for facilitating transmission of audio data between the first user device and the second user device. The network is preferably capable of facilitating transmission of audio data between user devices that are geographically separated. That is, the network is preferably capable of facilitating transmission of audio data between user devices that are unable to communicate via a local network, such as a Local Area Network (LAN). For example, the network may be the internet.

The first user device is preferably a local user device and the second user device is preferably a connected remote user device. That is, the local user device and the second user device are preferably geographically separated to the extent that connection is required via the network.

The method of the first aspect of the present invention may provide several advantages. By generating text data representative of the first audio data, the one or more speech samples can be represented in a form that takes up significantly less bandwidth than audio data. By transmitting this text data, which is more bandwidth-efficient than audio data, representative of the one or more speech samples, bandwidth usage during the video gaming session may be reduced (at least with respect to the transfer of audio data representing the one or more speech samples). Thus, bandwidth usage at the network may be reduced. Advantageously, audio lag during communication between the first user device and the second user device may be reduced. Consequently, a user experience may be improved because it may be less likely that the second user is unable to understand the first user due to there being a reduced audio lag. In summary, the method of the first aspect of the present invention may facilitate real-time communication with reduced lag.

The method preferably further comprises: extracting one or more features of the first audio data; transmitting the one or more features; and using the one or more features to generate the second audio data. The one or more features may be represented as text labels, such that the features can be sent alongside the text data with minimal bandwidth usage. The one or more features may be understood as characteristics of the one or more speech samples represented by the first audio data that may not be captured during generation of the text data, for example following a speech-to-text operation. Example characteristics may be a tone of voice, intonation, volume, and/or any other characteristic that affects the sound of speech. Accordingly, the one or more features may be transmitted alongside the text data, and the second audio data may be generated using these one or more features. Advantageously, a quality of the second audio data output at the audio output device associated with the second user device may be improved, whilst still minimizing bandwidth usage during communication. More particularly, the second audio data output at the audio output device may be more representative (i.e., more similar) of the one or more speech samples represented by the first audio data.

In some embodiments, the one or more features comprise one or more sentiment features, each sentiment feature being representative of a sentiment associated with a respective portion of the first audio data. A "sentiment feature" may be understood as a characteristic associated with a sentiment of the respective portion of the first audio data. That is, the sentiment feature may be a representation of a sentiment or emotion conveyed by the first user at the point of recording by the audio device associated with the first user device. Thus, the second audio data may be generated based on the sentiment or emotions of the one or more speech samples, thereby making the output audio based on the second audio data more similar to the one or more speech samples. Advantageously, the present invention may provide a means for more accurately reproducing the input one or more speech samples.

Preferably, the one or more sentiment features are extracted using a sentiment analysis module arranged to execute: a machine learning model; and/or a rule-based model; wherein the sentiment analysis module is arranged to select a sentiment feature from a range of pre-defined sentiment features. The machine learning model may be adjusted over time to produce new outputs corresponding to new sentiment labels, thereby facilitating the extraction of a greater range of sentiment features. A greater range of sentiment features may in turn improve a similarity between the one or more speech samples and the audio output based on the second audio data.

Preferably, the second audio data is generated using a text-to-speech layer arranged to modulate a synthesised voice according to the one or more sentiment features. In this way, the one or more sentiment features can be conveyed by a modulation of the synthesised voice.

Preferably, the one or more features comprise one or more background acoustic features of the first audio data. A "background acoustic feature" may be understood as a characteristic associated with an aspect of the first audio data that is unrelated to the one or more speech samples. That is, the background acoustic feature may be a representation of aspects of the first audio data that are not generated by the first user speaking. For example, the background acoustic feature may be an acoustic characteristic associated with an environment in which the first user is located, acoustic properties of the input audio device, and/or a background noise. Thus, the second audio data may be generated based on the first audio data aspects that are not captured by a speech-to-text operation, thereby making the output audio based on the second audio data more similar to the actual audio recorded by the input audio device. This may advantageously provide a more realistic audio output.

Preferably, the background acoustic feature is one or more of: a background noise audio sample; an environment acoustic characteristic; and an audio quality of the audio input device associated with the first user device. A background noise audio sample may be an aspect (e.g., a waveform) of the first audio data that is a real audio sample that is not provided by the first user, for example mouse click sound. The environment acoustic characteristic may be an aspect (e.g., a waveform) of the first audio data that influences the way in which the first user sounds, for example as a result of reverberation. The audio quality of the audio input device may be an aspect (e.g., a waveform) of the first audio data related to an ability of the audio input device to accurately record the one or more speech samples, for example sound fidelity. This may advantageously provide a more realistic audio output.

The method preferably further comprises: correlating the one or more features with respective portions of the first audio data; wherein the second audio data is generated according to the correlated features and portions of the first audio data. This correlation is preferably transmitted alongside the text data. Correlating the one or more features with respective portions of the first audio data may be understood as associating a feature with a respective portion of the first audio data. In this way, any change in features, for example a change in sentiment, may be represented by associating the new sentiment with a new portion of the first audio data. Therefore, when the second audio data is generated, the features may be more accurately represented in the output audio.

In some embodiments, the one or more features are extracted from the first audio data. In this way, the one or more features may be extracted prior to generation of the text data. Extracting the one or more features from the first audio data may provide a more accurate representation of some features, such as the background acoustic features. In particular, it may be more suitable to extract the one or more background acoustic features using a technique such as a Fourier Transform.

In some embodiments, the one or more features are extracted from the text data. In this way, the one or more features may be extracted following generation of the text data. Extracting the one or more features from the first audio data may provide a more accurate representation of some features, such as the one or more sentiment features. In particular, it may be more suitable to extract the one or more sentiment features by inputting text data (or a numerical representation of the text data) to a machine learning algorithm for sentiment classification.

It will be appreciated that some embodiments may comprise some features being extracted from the audio data, and some features from the text data. For example, it may be preferable to extract sentiment features from the text data, whilst the background acoustic features are extracted from the audio data.

The method preferably further comprises: extracting one or more text portions from the text data; modifying the one or more text portions; and using the modified text portions to generate the second audio data. The "text portions" may be sections of text, such as sentences or other text groupings. It will be appreciated that these text portions are not limited. The one or more text portions may be portions that require some form of processing prior to generation of the second audio data. For example, the one or more text portions may relate to speech that is determined to be unacceptable, such as curse words. The one or more text portions may be modified according to one or more user-defined rules. For example, a user-defined rule may require the deletion of curse words. In this case, modifying the one or more text portions may comprise deleting text portions comprising curse words. Thus, the method may provide a means for generating second audio data that conforms to user-defined rules. Since the method performs this operation on text data, processing power may be saved when compared to methods which modify audio data.

Preferably, the one or more text portions are extracted using a trained artificial neural network. In this way, the trained artificial neural network may be modified over time to label additional text portions for extraction and modification.

In some embodiments, the one or more text portions are extracted and modified by a third computing device. In this way, the text data may be transmitted to the third computing device and the one or more text portions may be extracted prior to transmission to the second user device. The text data may be transmitted to the third computing device via the network, or via a different network such as a Local Area Network (LAN). The third computing device may be optimized for such extraction of the one or more text portions. Such an embodiment may be particularly useful for user devices which do not comprise the requisite processing power for extraction of the one or more text portions.

In the context of the present invention, the third computing device may be understood as a computing device that is distinct from the first user device and the second user device. For example, the third computing device may be a central server arranged to carry out various processing tasks on behalf of the first user device and/or the second user device.

In some embodiments, the first audio data is received by the first user device and the text data is generated by a speech-to-text layer of the first user device. In this way, the first audio data may be converted to text data at the first user device prior to transmission via the network. Advantageously, only the text data is transmitted over the network, and network bandwidth usage is reduced.

In some embodiments, the first audio data is received by a third computing device and the text data is generated by a speech-to-text layer of the third computing device. In this way, the first audio data may be transmitted to the third computing device, for example via the network or via a LAN, prior to generation of the text data. The text data may be subsequently transmitted to the second user device via the network. This embodiment may be particularly useful for user devices which do not comprise the requisite processing power for generation of the text data. Whilst there may be partial transmission of the first audio data over the network, network bandwidth usage may still be reduced because text data is sent to the second user device.

In some embodiments, the second audio data is generated by a text-to-speech layer of the second user device. In this way, the second user device may receive the text data and generate the second audio data. In this embodiment, only text data is transmitted over the network and as such, network bandwidth usage is reduced.

In some embodiments, the second audio data is generated by a speech-to-text layer of a third computing device; and wherein the method further comprises: transmitting the second audio data to the second user device. In this embodiment, the third computing device, which may be a local computing device, may receive the text data and perform the speech-to-text operation. This embodiment may be particularly useful when the second user device comprises insufficient processing power for the speech-to-text operation. Advantageously, network bandwidth usage may still be reduced during transmission of the text data to the third computing device.

In accordance with a second aspect of the present invention, there is provided a system for facilitating audio communication between a first user device and a second user device connected via a network during an online video gaming session; wherein the first user device is configured to: receive first audio data from an audio input device associated with the first user device, the first audio data representing one or more speech samples; generate text data representative of the first audio data; and transmit, via the network, the text data to the second user device; wherein the second user device is configured to: generate second audio data based on the text data; and output audio based on the second audio data at an audio output device associated with the second user device.

The first user device and/or the second processing device may comprise, or be in communication with, suitable processing means for carrying out their respective processing steps. For example, the first user device and/or the second user device may be a desktop computer comprising suitable processing means for carrying out the processing steps. Alternatively, the first user device and/or the second user device could be a device, such as a gaming headset in communication with a separate device comprising processing means suitable for carrying out the processing task.

In an alternative embodiment of the second aspect of the present invention, there is provided a system for facilitating audio communication between a first user device and a second user device connected via a network during an online video gaming session, the system comprising a third computing device; wherein the first user device is configured to: receive first audio data from an audio input device associated with the first user device, the first audio data representing one or more speech samples; and transmit, via the network, the first audio data to the third computing device; wherein the third computing device is configured to: generate text data representative of the first audio data; and transmit, by the network, the text data to the second user device; and wherein the second user device is configured to: generate second audio data based on the text data; and output audio based on the second audio data at an audio output device associated with the second user device.

In an alternative embodiment of the second aspect of the present invention, there is provided a system for facilitating audio communication between a first user device and a second user device connected via a network during an online video gaming session, the system a third computing device; wherein the first user device is configured to: receive first audio data from an audio input device associated with the first user device, the first audio data representing one or more speech samples; generate text data representative of the first audio data; and transmit, via the network, the text data to the third computing device; wherein the third computing device is configured to: generate second audio data based on the text data; and transmit, by the network, the second audio data to the second user device; and wherein the second user device is configured to: output audio based on the second audio data at an audio output device associated with the second user device.

In an alternative embodiment of the second aspect of the present invention, there is provided a system for facilitating audio communication between a first user device and a second user device connected via a network during an online video gaming session, the system comprising a third computing device, and a further third computing device; wherein the first user device is configured to: receive first audio data from an audio input device associated with the first user device, the first audio data representing one or more speech samples; and transmit, via the network, the first audio data to the third computing device; wherein the third computing device is configured to: generate text data based on the first audio data; and transmit, by the network, the text data to the further third computing device; wherein the further third computing device is configured to: generate second audio data based on the text data; and transmit the second audio data to the second user device; and wherein the second user device is configured to: output audio based on the second audio data at an audio output device associated with the second user device.

In accordance with a third aspect of the present disclosure, there is provided a system comprising one or more processors arranged to carry out the method steps of the method according to the first aspect.

### BRIEF DESCRIPTION OF DRAWINGS

Exemplary embodiments of the invention will now be described by way of example, with reference to the accompanying drawings, wherein:
Figure 1a illustrates an exemplary system for facilitating audio communication during an online video gaming session, in accordance with a second aspect of the present invention;
Figure 1b illustrates a further exemplary system for facilitating audio communication during an online video gaming session, in accordance with a second aspect of the present invention;
Figure 1c illustrates a further exemplary system for facilitating audio communication during an online video gaming session, in accordance with a second aspect of the present invention;
Figure 2 illustrates an exemplary method for facilitating audio communication during an online gaming session using the system of Figure 1, in accordance with the first aspect of the present invention;
Figure 3 illustrates a further exemplary method for facilitating audio communication during an online gaming session using the system of Figure 1, in accordance with the first aspect of the present invention; and
Figure 4 illustrates a further exemplary method for facilitating audio communication during an online gaming session using the system of Figure 1, in accordance with the first aspect of the present invention.

### DETAILED DESCRIPTION

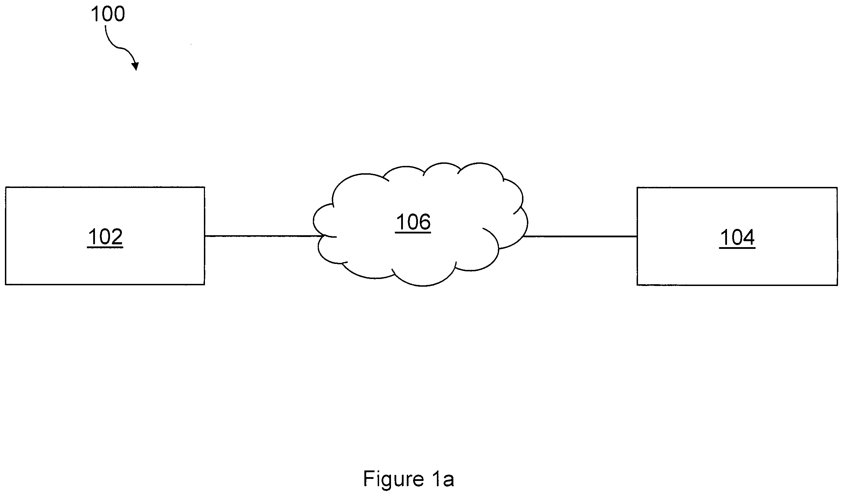

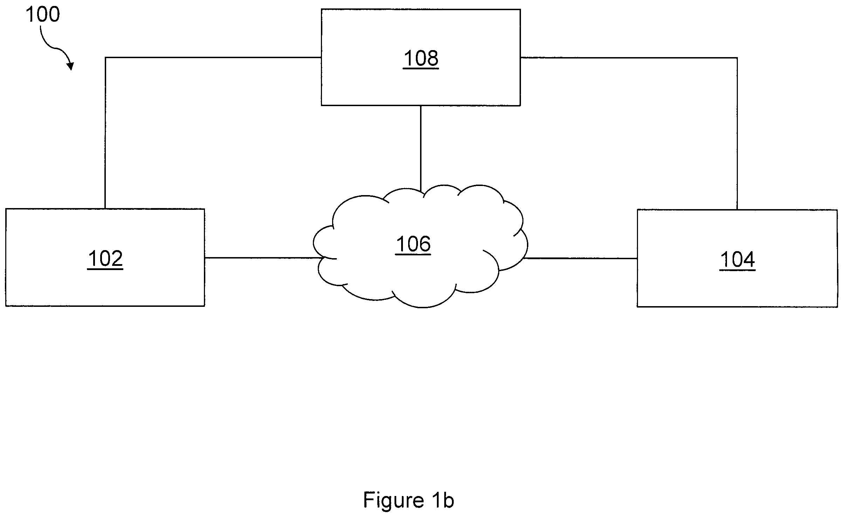

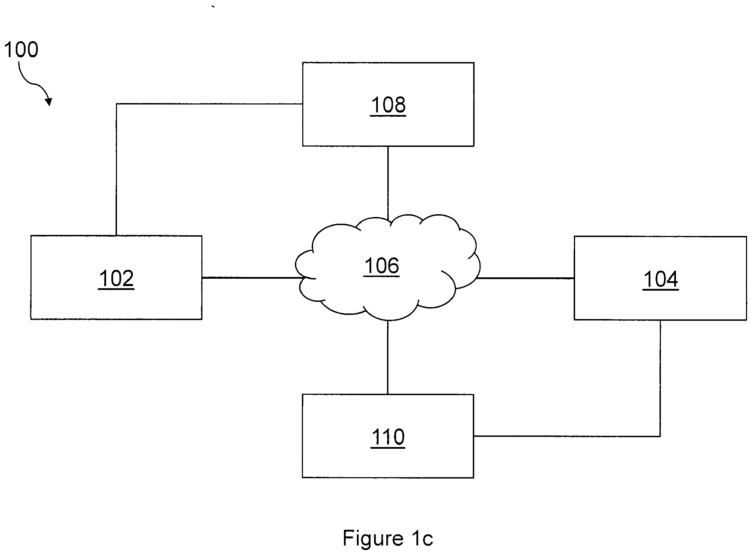

Referring to Figure 1, there is provided an exemplary system 100 for facilitating audio communication during an online video gaming session. The system 100 comprises a first user device 102 and a second user device 104 connected thereto via a network 106.

The "online video gaming session" refers to a period in which one or more individuals, such as users associated with the user devices 102, 104, engage in playing a video game via a network such as the internet. In the context of the present invention, the video game can facilitate more than one user in the same game environment. The video game may be a cloud-based video game, such that the system 100 is a cloud gaming system 100. The cloud-based video game may be any video game or computer game having cloud-based aspects, that is, at least part of the program code, data storage, and/or execution of the video game is at the server 106 and thence accessed remotely by the first user device 102 and the second user device 106.

The first user device 102 is a computing device associated with a first user (not shown). The first user device 102 may be operated by the first user during the online video gaming session. The first user device 102 typically comprises components that facilitate the user to perceive audio, visual, and/or haptic outputs of a video game of the online video gaming session. The first user device 100 could be, or comprise, a desktop computer, a laptop computer, a tablet computer, a smartphone, a smart television, a gaming headset, and the like. The first user device 102 typically comprises one or more processing units, such as a central processing unit (CPU) and/or a graphical processing unit (GPU). The first user device 102 typically also comprises further features such as a storage means, random access memory (RAM), and other features typically associated with gaming devices. The first user device 102 comprises, or is associated with, one or more input devices. At least one of the input devices is an audio input device, such as a microphone that is part of a gaming headset. The first user device 102 also comprises, or is associated with, suitable interface apparatuses for communication with the network 104, for example via a router proximate the first user device 102.

The second user device 104 is a computer device associated with a second user. The second user device 104 is typically substantially similar to the first user device 102. At least one of the input devices associated with the second user device 104 is an audio output device, such as a speaker that is part of a gaming headset.

The first user device 102 is a local user device 102 and the second user device 104 is a remote user device 104. That is, the second user device 104 is located at a geographic position that is sufficiently distinct from the geographic position of the first user device 104 such that communication via the network 106 is required. Each user device 102, 104 comprises suitable interface apparatuses for communication with the network 106.

The network 106 is typically the internet or any other network known in the art that is suitable for facilitating an online video gaming session. The network 106 is usually not a local area network (LAN), and as such the network 106 facilitates an online video gaming session between user devices that are geographically separated to the extent that a non-localised network structure is required.

Figure 1b shows an alternative system 100 for facilitating audio communication during an online video gaming session. The system 100 comprises the first user device 102 and the second user device 104 connected thereto via the network 106. The system 100 further comprises a third computing device 108.

The third computing device 108 is a computing device that is distinct from the first user device 102 and the second user device 104. The third computing device 108 could be a central server arranged to carry out various processing tasks on behalf of the first user device 102 and/or the second user device 104. The third computing device 108 could be a remote computing device in communication with the network 106. However, the third computing device 108 could also be a local device connected to the first user device 102 or the second user device 104 via a local network connection.

Figure 1c shows an alternative system 100 for facilitating audio communication during an online video gaming session. The system 100 comprises the first user device 102 and the second user device 104 connected thereto via the network 106. The system 100 further comprises the third computing device 108 and a further third computing device 110.

The further third computing device 110 is a computing device that is distinct from the first user device 102, the second user device 104, and the third computing device 108. The further third computing device 110 could be a central server arranged to carry out various processing tasks on behalf of the second user device 104. The further third computing device 110 could be a remote computing device in communication with the network 106. However, the further third computing device 110 could also be a local device connected to the second user device 104 via a local network connection.

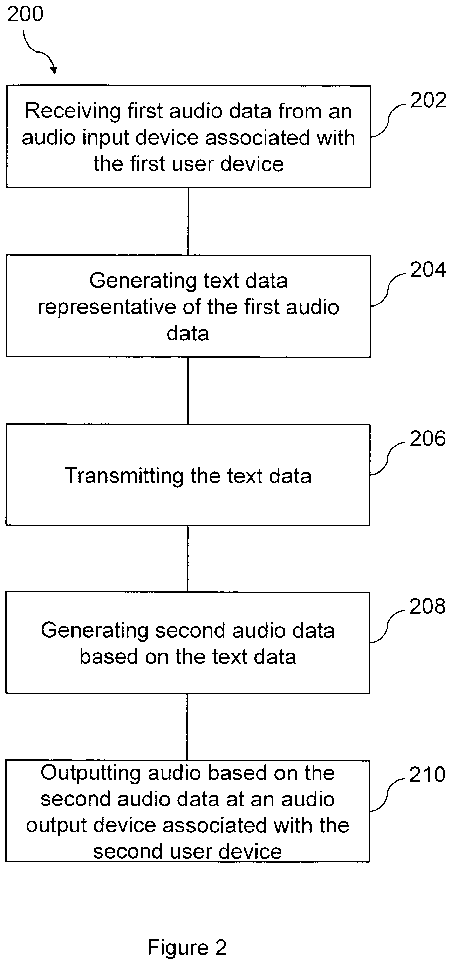

Figure 2 illustrates an exemplary method 200 for facilitating audio communication during a gaming session using the systems 100 of Figures 1a, 1b, or 1c. The method 200 comprises steps 202, 204, 206, 208, and 210.

Step 202 comprises receiving first audio data from an audio input device associated with the first user device 102, the first audio data representing one or more speech samples. For example, the first user can speak into a microphone associated with the first user device 102, the microphone being a part of a gaming headset connected to, or part of, the first user device 102. The microphone can detect the sound waves of the user's speech and provide first audio data representing these sound waves.

The first user device 102 may receive the first audio data from the audio input device associated with the first user device 102. In this embodiment, it is intended that one or more processing tasks (for example, audio transcription) related to the first audio data are performed by the first user device 102. This embodiment may be particularly suitable for instances where the first user device 102 comprises adequate processing capabilities for carrying out said one or more processing tasks. For example, in embodiments wherein the first user device 102 is a desktop computer.

Alternatively, the third computing device 108 may receive the first audio data. In this embodiment, the third computing device 108 receives the first audio data from audio input device associated with the first user device 102, for example via the first user device 102 and the network 106. In this embodiment, it is intended that one or more processing tasks (for example audio transcription) related to the first audio data are performed by the third computing device 108. This embodiment may be particularly suitable for instances where the first user device 102 comprises inadequate processing capabilities for carrying out said one or more processing tasks. For example, in embodiments wherein the first user device 102 is a gaming headset.

Step 204 comprises generating text data representative of the first audio data. The text data is generated by any known means as is known in the art, such as an automatic speech recognition (ASR) system. The ASR system may utilise a pre-trained artificial neural network, for example utilising a transformer model. Prior to generation of the text data, one or more pre-processing steps may be executed, for example noise reduction, filtering, normalization, and/or the like to improve audio quality of the audio input and increase an accuracy of speech recognition. Furthermore, one or more post-processing steps may be executed, for example a grammar checking algorithm, a spell-checking algorithm, and/or the like.

By generating text data representative of the first audio data, the one or more speech samples can be represented in a form that takes up significantly less bandwidth than audio data. This is because text data can be represented as a sequence of characters rather than as an audio waveform, thereby allowing the one or more speech samples to be represented with less data.

The first user device 102 may generate text data representative of the first audio data after receiving 202 the first audio data. More particularly, a text-to-speech layer of the first user device 102 generates the text data representative of the first audio data. Therefore, text data representative of the first audio data is generated prior to transmission data to the second user device 104.

Alternatively, the third computing device 108 generates the text data representative of the first audio data after receiving 202 the first audio data. More particularly, the text-to-speech layer of the third computing device 108 generates the text data representative of the first audio data. Therefore, text data representative of the first audio data is generated prior to transmission of data to the second user device 104.

Step 206 comprises transmitting, by the network 106, the text data. The text data is transmitted using known data transmission techniques. The text data transmission may comprise encoding the text data to a format suitable for transmission over the network, for example ASCII. Other techniques such as packetization, routing, and the like may also be utilized.

The first user device 102 may transmit 206, by the network 106, the text data. This embodiment follows embodiments wherein the first user device 102 receives 202 first audio data and generates 204 the text data. The recipient of the text data could be the second user device 104. Accordingly, communication is solely between the first user device 102 and the second user device 104. Alternatively, the recipient of the text data could be the third computing device 108. Accordingly, communication is between the first user device 104, the third computing device 108, and the second user device 104.

Alternatively, the third computing device 108 transmits 206, by the network 106, the text data. This embodiment follows embodiments wherein the third computing device 108 receives 202 first audio data and generates 204 the text data. The recipient of the text data could be the second user device 104. Accordingly, communication is between the first user device 102, the third computing device 108, and the second user device 104. Alternatively, the recipient of the text data could be the further third computing device 110. Accordingly, communication is between the first user device 104, the third computing device 108, the second user device 104, and the further third computing device 110.

By transmitting text data, which is more bandwidth-efficient than audio data, that is representative of the one or more speech samples, bandwidth requirements of the video gaming session are reduced (at least with respect to the transfer of audio data representing the one or more speech samples). Thus, bandwidth usage at the network 106 is reduced.

Step 208 comprises generating second audio data based on the text data. The second audio data is generated by any means as is known in the art. For example, the second audio data is generated using a text-to-speech (TTS) synthesis system. The TTS system may utilise a pre-trained artificial neural network. Prior to generation of the second audio data, one or more pre-processing steps may be executed, for example normalization, punctuation handling, prosodic processing, and/or the like to improve the second audio data. Furthermore, one or more post-processing steps may be executed, for example a prosody adjustment, volume normalization, noise reduction and/or the like.

The second audio data can be generated 208 by a text-to-speech layer of the second user device 104. This embodiment follows embodiments wherein the second user device 104 receives the text data in step 206, from the first user device 102 or the third computing device 108. This embodiment may be particularly suitable for instances wherein the second user device 104 comprises adequate processing capabilities for generating the second audio data. For example, in embodiments wherein the second user device 104 is a desktop computer.

Alternatively, the second audio data can be generated 208 by a text-to-speech layer of the third computing device 108 (when the first user device 102 transmits 206 the text data to the third computing device 108) or the further third user device 110 (when the third computing device 108 transmits 206 the text data to the third computing device 108). In such embodiments, the method further comprises transmitting the second audio data to the second user device 104. These embodiments may be particularly suitable for instances where the second user device 104 comprises inadequate processing capabilities for generating the second audio data. For example, in embodiments wherein the second user device 104 is a gaming headset.

The second audio data is therefore generated based on text data which is itself generated based on the first audio data which represents the one or more speech samples. Therefore, the one or more speech samples are provided to the second user device 104 using less bandwidth than if the first audio data had been transmitted straight to the second user device 104.

Step 210 comprises outputting audio based on the second audio data at an output device associated with the second user device 104. Any known techniques may be employed to output the second audio data.

The method 200 is particularly advantageous in situations where a voice chat session is ongoing between the first user device 102 and the second user device 104, for example during an online video gaming session. The voice chat session may be prone to a delay (lag) between recording of one or more speech samples by the audio input device associated with the first user device 102, and output of audio data representative of the one or more speech samples at the audio output device associated with the second user device 104. This lag may significantly harm a quality of communication between the first user device 102 and the second user device 104, sometimes to the point that the second user is unable to understand the first user. By generating text data representative of the first audio data, transmitting the text data, and generating second audio data based on the text data, less bandwidth is used. Accordingly, there may be less lag during communication between the first user device 102 and the second user device 104. Consequently, it is less likely that the second user will be unable to understand the first user, and real-time communication is facilitated.

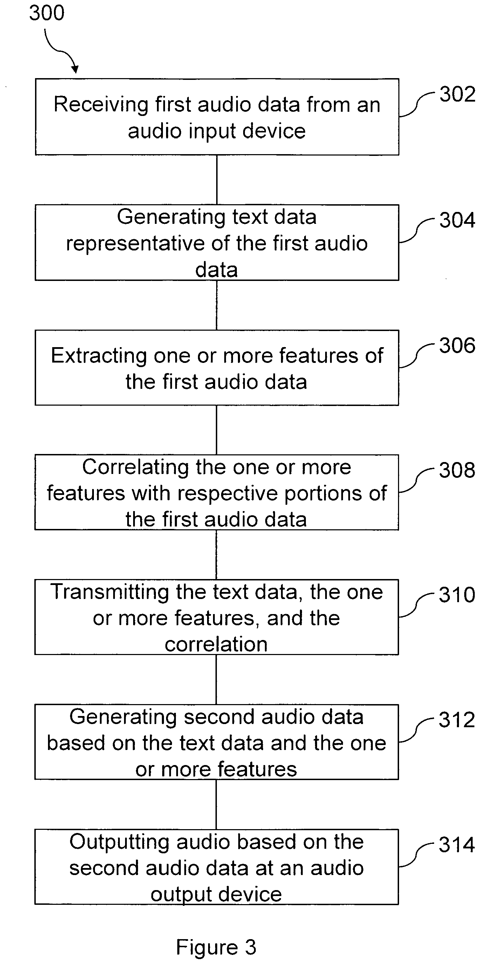

Figure 3 illustrates a further exemplary method 300 for facilitating audio communication during a gaming session using the systems 100 of Figures 1a, 1b, or 1c. The method 300 comprises steps 302, 304, 306, 310, 312, and 314.

Step 302 comprises receiving first audio data from an audio input device. Step 302 is substantially similar to step 202 of the method 200, which is not repeated here for the sake of brevity.

Step 304 comprises generating text data representative of the first audio data. Step 304 is substantially similar to step 204 of the method 200, which is not repeated here for the sake of brevity.

Step 306 comprises extracting one or more features of the first audio data. The one or more features may be extracted from the first audio data. Alternatively, the one or more features are extracted from the text data. Alternatively, the one or more features are extracted from the first audio data and the text data.

The one or more features may be understood as characteristics of the one or more speech samples represented by the first audio data during capture by the audio input device. The one or more features may represent aspects of the one or more speech samples that aren't represented by the text data representation of the first audio data. In particular, whilst the text data is capable of representing spoken words within the one or more speech samples, it may lack other aspects of the one or more speech samples, such as sentiment/emotion, intonation, pitch, or the like. Therefore, the one or more features may be used to increase a quality of the eventual output audio, as will be discussed further herein.

In some embodiments, the one or more features comprise one or more sentiment features, each sentiment feature being representative of a sentiment associated with a respective portion of the first audio data. That is, a sentiment feature may be associated with first audio data representative of a particular speech sample of the one or more speech samples. Accordingly, the one or more speech segments may be distinguished by respective sentiment features. A sentiment may be understood as an emotional tone or sentiment conveyed by the speaker during the one or more speech samples. For example, the sentiment may be positive, negative, neutral, or the like.

Extraction of the one or more sentiment features is achieved via a sentiment recognition module using known means. The sentiment recognition module may operate on the text data generated in step 304. The sentiment recognition module may utilize a machine learning model comprising trained sentiment classifiers; a rule-based model; and/or the like. For example, a string of text having the word "amazing" may be assigned a positive sentiment.

Additionally or alternatively, the one or more features comprise one or more background acoustic features of the first audio data. A "background acoustic feature" may be understood as a characteristic associated with an aspect of the first audio data that is unrelated to the one or more speech samples. That is, the background acoustic feature may be a representation of aspects of the first audio data that are not generated by the first user speaking. For example, the background acoustic feature may be an acoustic characteristic associated with an environment in which the first user is located, acoustic properties of the input audio device, and/or a background noise picked up by the audio input device associated with the first user device. Thus, the second audio data may be generated based on the first audio data aspects that are not captured by a speech-to-text operation, thereby making the output audio based on the second audio data more similar to the actual audio recorded by the input audio device.

The background acoustic features could include one or more of: a background noise audio sample; an environment acoustic characteristic; and an audio quality of the audio input device associated with the first user device. A background noise audio sample may be an aspect (e.g., a waveform) of the first audio data that is a real audio sample that is not provided by the first user, for example mouse click sound. The environment acoustic characteristic may be an aspect (e.g., a waveform) of the first audio data that influences the way in which the first user sounds, for example as a result of reverberation. The audio quality of the audio input device may be an aspect (e.g., a waveform) of the first audio data related to an ability of the audio input device to accurately record the one or more speech samples, for example sound fidelity.

Extraction of the one or more background acoustic features is achieved via a neural network comprising an input layer arranged to receive the first audio data; one or more hidden layers comprising pre-trained weights and biases, and an output layer arranged to classify different types of non-speech audio.

Step 308 comprises correlating the one or more features with respective portions of the first audio data. It is preferable that step 308 is carried out by the same device that carried out step 306.

Correlating the one or more features with respective portions of the first audio data may be understood as associating a feature with a respective portion of the audio data. The correlation may be represented as portion of a text label that indicates a coupling between a feature and the respective portion of the first audio data. In this way, any change in features, for example a change in sentiment, may be represented by associating the new sentiment with a new portion of the audio data. Therefore, when the second audio data is generated, the features may be more accurately represented in the output audio.

Step 310 comprises transmitting, by the network, the text data and the one or more features. Step 310 is substantially similar to step 206 of the method 200, which is not repeated for the sake of brevity. Step 310 further comprises transmitting the one or more features. For example, the one or more features may be transmitted as part of the same communication as the text data. The one or more features may be represented as text labels such that only text data is transmitted via the network.

Step 312 comprises generating second audio data based on the text data and the one or more features. Step 312 is substantially similar to step 208 of the method 200, which is not repeated for the sake of brevity. However, it will be understood that the second audio data generated in step 312 is further based on the one or more features extracted in step 306. The second audio data generated in step 312 is also based on the correlation of step 308.

As with step 208, the second audio data can be generated by a text-to-speech layer of the second user device 104 (when the first user device 102 transmits 310 the text data and features to the second user device 104). Alternatively, the second audio data can be generated by a text-to-speech layer of the third computing device 108 (when the first user device 102 transmits 310 the text data and features to the third computing device 108) or the further third user device 110 (when the third computing device 108 transmits 310 the text data and features to the third computing device 108). In such embodiments, the method further comprises transmitting the second audio data to the second user device 104.

The text-to-speech layer of the second user device 104, the third computing device 108, and/or the further third computing device 110 can further include a speech modulation layer. The speech modulation layer is arranged to alter the audio data generated by the text-to-speech layer to include the one or more sentiment features. For example, the speech modulation layer is an emotional voice synthesis layer, as is known in the art.

The text-to-speech layer of the second user device 104, the third computing device 108, and/or the further third computing device 110 can further include a background imitation layer. The background imitation layer is arranged to alter the audio data generated by the text-to-speech layer to include the one or more background acoustic features. For example, the background imitation modulation layer is arranged to determine the presence of one or more gaps in the second audio data, and insert audio in the one or more gaps, the inserted audio being based on first audio data that corresponds to the one or more gaps.

Step 314 comprises outputting audio based on the second audio data at an audio output device. Step 314 is substantially similar to step 210 of the method 200, which is not repeated for the sake of brevity.

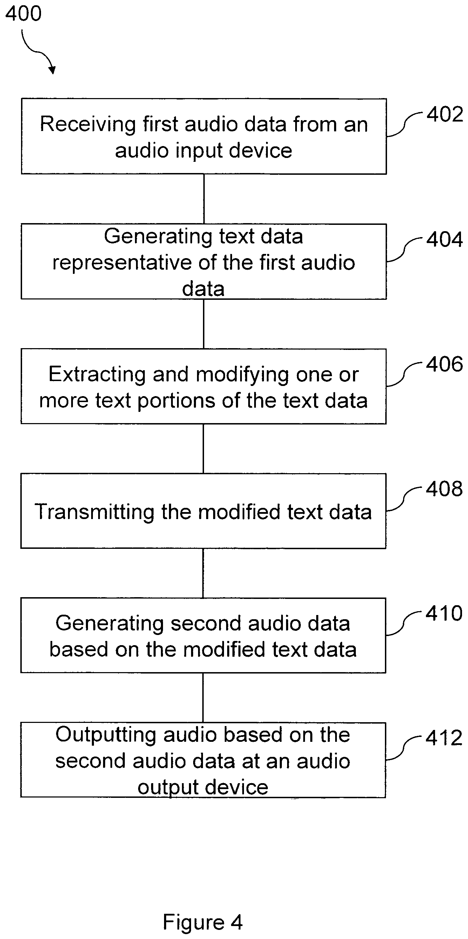

Figure 4 illustrates a further exemplary method 400 for facilitating audio communication during a gaming session using the systems 100 of Figures 1a, 1b, or 1c. The method 400 comprises steps 402, 404, 406, 410, and 412. It is intended that one or more of the steps of the method 200 and/or the method 300 are compatible with this method 400.

Step 402 comprises receiving first audio data from an audio input device. Step 402 is substantially similar to step 202 of the method 200 and step 302 of the method 300, neither of which are repeated here for the sake of brevity.

Step 404 comprises generating text data representative of the first audio data. Step 404 is substantially similar to step 204 of the method 200, and step 304 of the method 300, neither of which are repeated here for the sake of brevity.

Step 406 comprises extracting and modifying one or more text portions from the text data. The one or more text portions may be understood as portions or sections of the text data that represent parts of the one or more speech samples that are to be modified for output at the second user device. The "text portions" may be sections of text, such as sentences or other text groupings. It will be appreciated that these text portions are not limited.

The one or more text portions may be extracted via any means known in the art. For example, the one or more text portions are extracted from the text data using a training artificial neural network. The artificial neural network can be trained using a dataset comprising a plurality of labelled text data samples comprising one or more text portions to be identified. The artificial neural network can be continuously updated with new datasets to identify new text portions to be identified.

The one or more text portions may be portions that require some form of processing prior to generation of the second audio data. For example, the one or more text portions may relate to speech that is determined to be unacceptable, such as curse words. The one or more text portions may be modified according to one or more user-defined rules. For example, a user-defined rule may require the deletion of curse words. In this case, modifying the one or more text portions may comprise deleting text portions comprising curse words. Thus, the method may provide a means for generating second audio data that conforms to user-defined rules. Since the method performs this operation on text data, processing power may be saved when compared to methods which modify audio data.

Extraction of the one more text portions may be based on the one or more features of the first audio data, for example as extracted in step 306 of the method 300. For example, the one or more features may include a hateful sentiment label associated with a particular text portion of the text data. Step 406 may comprise extracting the text portion based on the sentiment label and deleting the text data.

The one or more text portions are preferably extracted and modified by the third computing device 108. However, it will be appreciated that this is not limiting.

Step 408 comprises transmitting, by the network, the modified text data. Step 408 is substantially similar to step 206 of the method 200 and step 310 of the method 300, which are not repeated for the sake of brevity.

It will be appreciated that the method 400 may also comprise steps 306 and 308 of the method 300 and thus step 408 may also comprise transmitting the one or more features and the correlation.

Step 410 comprises generating second audio data based on the modified text data and the one or more features. Step 410 is substantially similar to step 208 of the method 200 and step 312 of the method 300, which are not repeated for the sake of brevity. It will be understood that the second audio data generated in step 410 may be further based on the one or more features and the correlation, such as the one or more features extracted in step 306 and the correlation in step 308 of the method 300.

Step 412 comprises outputting audio based on the second audio data at an audio output device. Step 412 is substantially similar to step 210 of the method 200 and step 314 of the method 300, which is not repeated for the sake of brevity.

## Claims

1. A method for facilitating audio communication between a first user device and a second user device connected via a network during an online video gaming session, the method comprising:
receiving first audio data from an audio input device associated with the first user device, the first audio data representing one or more speech samples;
generating text data representative of the first audio data;
transmitting the text data;
generating second audio data based on the text data; and
outputting audio based on the second audio data at an audio output device associated with the second user device.

2. The method of any preceding claim, further comprising:
extracting one or more features of the first audio data;
transmitting the one or more features; and
using the one or more features to generate the second audio data.

3. The method of claim 2, wherein the one or more features comprise one or more sentiment features, each sentiment feature being representative of a sentiment associated with a respective portion of the first audio data.

4. The method of claim 3, wherein the one or more sentiment features are extracted using a sentiment analysis module arranged to execute:
a machine learning model; and/or
a rule-based model;
wherein the sentiment analysis module is arranged to select a sentiment feature from a range of pre-defined sentiment features; and wherein the second audio data is generated using a text-to-speech layer arranged to modulate a synthesised voice according to the one or more sentiment features.

5. The method of any of claims 2 to 4, wherein the one or more features comprise one or more background acoustic features of the first audio data; and wherein the background acoustic feature is one or more of:
a background noise audio sample;
an environment acoustic characteristic; and
an audio quality of the audio input device associated with the first user device.

6. The method of any of claims 2 to 5, further comprising:
correlating the one or more features with respective portions of the first audio data;
wherein the second audio data is generated according to the correlated features and portions of the first audio.

7. The method of any of claims 2 to 6, wherein the one or more features are extracted from the first audio data; or wherein the one or more features are extracted from the text data.

8. The method of any preceding claim, further comprising:
extracting one or more text portions from the text data;
modifying the one or more text portions; and
using the modified text portions to generate the second audio data.

9. The method of claim 8, wherein the one or more text portions are extracted using a trained artificial neural network.

10. The method of claim 8 or claim 9, wherein the one or more text portions are extracted and modified by a third computing device.

11. The method of any preceding claim, wherein the first audio data is received by the first user device and the text data is generated by a speech-to-text layer of the first user device; or wherein the first audio data is received by a third computing device and the text data is generated by a speech-to-text layer of the third computing device.

12. The method of any preceding claim, wherein the second audio data is generated by a text-to-speech layer of the second user device; or wherein the second audio data is generated by text-to-speech layer of a third computing device; and wherein the method further comprises:
transmitting the second audio data to the second user device.

13. The method of any preceding claim, wherein the first user device is a local user device and the second user device is a connected remote user device.

14. A system for facilitating audio communication between a first user device and a second user device connected via a network during an online video gaming session;
wherein the first user device is configured to:
receive first audio data from an audio input device associated with the first user device, the first audio data representing one or more speech samples;
generate text data representative of the first audio data; and
transmit, via the network, the text data to the second user device;
wherein the second user device is configured to:
generate second audio data based on the text data; and
output audio based on the second audio data at an audio output device associated with the second user device.

15. A system comprising one or more processors arranged to carry out the method steps of any of claims 1 to 13.
